# EUROPÄISCHE PATENTSCHRIFT

(11) **EP 0 865 854 B1**
(45) Veröffentlichungstag und Bekanntmachung des Hinweises auf die Patenterteilung: **04.06.2003**
(21) Anmeldenummer: 98810101.0
(22) Anmeldetag: 10.02.1998
(51) Int. Cl.: B23B 51/02

(54) **Bohr- und/oder Meisselwerkzeug**
Drill and or chisel tool
Outil de forage et ou de frappe

(30) Priorität: 22.02.1997 DE 19707115
(43) Veröffentlichungstag der Anmeldung: 23.09.1998
(73) Patentinhaber: HILTI Aktiengesellschaft, 9494 Schaan (LI)
(72) Erfinder: Kleine, Werner, 28832 Achim (DE); Bongers-Ambrosius, Hans-Werner, 81477 München (DE)
(74) Vertreter: Wildi, Roland

(56) Entgegenhaltungen:
- EP-A- 0 066 807
- EP-A- 0 155 216
- EP-A- 0 790 092
- DE-A- 4 012 772
- DE-U- 9 319 009
- FR-A- 2 124 857
- PATENT ABSTRACTS OF JAPAN vol. 8, no. 90 (M-292) [1527] , 25.April 1984 & JP 59 007511 A (SEJI OOMOTO), 14.Januar 1984,

## Beschreibung

Die Erfindung betrifft ein Verfahren zum Herstellen eines Bohr- und/oder Meisselwerkzeugs gemäβ Oberbegriff von Patentanspruch 1. Die Werkzeuge der genannten Art dienen der Bearbeitung von Gestein, Beton, Mauerwerk und dergleichen spröden Materialien. in dem der Bohrrichtung abgewandten Bereich weisen die Werkzeuge an sich bekannte Einsteckenden auf, die auf die jeweils in Betracht kommenden Antriebsgeräte abgestimmt sind. In Bohrrichtung schliesst sich an das Einsteckende ein wendelförmige Abfuhrnuten aufweisender Schaft an. An diesen Schaft schliesst sich bohrrichtungsseitig ein Bohrkopf an, welcher eine in Bohrrichtung offene Aussparung zur Aufnahme eines oder mehrerer Hartmetalleinsätze aufweist. Dadurch, dass die Hartmetalleinsätze in einer Aussparung des Bohrkopfes angeordnet sind, werden sie seitlich von Bereichen des Bohrkopfes abgestützt, was sich vorteilhaft auf die Verbindung zwischen Hartmetalleinsätzen und Bohrkopf auswirkt. Darüber hinaus erfahren die Hartmetalleinsätze von Bereichen des Bohrkopfes eine grossflächige Abstützung, was zur Förderung der Widerstandskraft gegen schädliche Einwirkungen aus Drehmoment und Schlägen beiträgt.

Die Abfurnuten des Schaftes dienen dem Transport des abgebauten Bohrkleins. Um aber sicherzustellen, dass der Transport dieses Bohrkleins ungehindert vom Bohrkopf zum entgegen der Bohrrichtung liegenden Bereich der Abfuhrnuten erfolgt, ist im Bohrkopf ein entsprechender Uebergangsbereich sicherzustellen. Dieser Uebergangsbereich entsteht durch einen entsprechenden Auslauf der Abfuhrnuten in Bohrrichtung. Damit it trotz dieses Auslaufes die Hartmetalleinsätze vom restlichen Bereich des Bohrkopfes noch ausreichend abgestützt sind, muss sichergestellt sein, dass der Auslauf der Abfuhrnuten im bohrrichtungsseitigen Endbereich nahezu achsparallel verläuft.

Bei den gebräuchlichen Werkzeugen gemäβ DE-A 4012772, die den nächstkommenden Stand der Technik beschreibt, mit einer oder zwei Abfurnuten entsteht aufgrund der wendelförmigen Anordnung eine relativ grosse Abweichung zum achsparallelen Verlauf. Würden solche Abfuhrnuten ohne ausreichende Neigungskorrektur in den Bohrkopf verlaufen, hätte dies eine ungenügende seitliche Abstützung der Hartmetalleinsätze zur Folge. Aus diesem Grunde erfahren die diesbezüglichen Werkzeuge eine besondere Gestaltung im Bereich des Bohrkopfes, entsprechend welcher in diesem Bereich im wesentlichen achsparallel verlaufende Abfuhrnuten geschaffen werden.

Die vorgenannte notwendige Korrektur der Abfuhrnuten führt zu einem herstellungstechnischen Mehraufwand, welcher sich wirtschaftlich negativ auf den Herstellungsprozess auswirkt. So ist beispielsweise bei spanabhebender Erzeugung der Abfuhrnuten eine spezielle Steuerung der Bearbeitungswerkzeuge erforderlich, was nebst apparativem Mehraufwand auch zu einem zeitlichen Mehraufwand führt.

Anstelle spanabhebender Bearbeitung findet heute aus wirtschaftlichen Gründen vermehrt eine spanlose Verarbeitung in der Art einer hauptsächlichen Umformung Anwendung, wobei es darum geht, dass der Hauptanteil der Verarbeitung durch Umformung erfolgt und gewisse Verfahrensschritte, wie Herstellung der Aussparungen für die Hartmetalleinsätze oder eine allfällige, geringfügige Korrektur der Abfuhrnuten, beispielsweise im Auslaufbereich spanabhebend erfolgen können. Auch bei diesem wirtschaftlich wesentlich attraktiveren Umformverfahren ist die Herstellung eines im wesentlichen achsparallelen, bohrrichtungsseitigen Auslaufes der Abfuhrnuten mit einem Mehraufwand verbunden. So ist für die diesbezügliche Gestaltung der Abfuhmuten beispielsweise beim Herstellen.durch Walzen ein spezieller zusätzlicher Walzvorgang erforderlich, welcher wiederum zu einem apparativen und zeitlichen Mehraufwand führt.

Zur Vermeidung des genannten Mehraufwandes bei durch Umformung hergestellten Werkzeugen ist es daher auch bekannt geworden, anstelle von Hartmetalleinsätzen in entsprechenden Aussparungen, vollständig aus Hartmetall bestehende Bohrköpfe stumpf auf den mit Abfuhrnuten versehenen Schaft aufzuschweissen. Da solche aus Hartmetall bestehende Bohrköpfe keiner seitlichen Abstützung bedürfen, kann eine gesonderte Bearbeitung des bohrrichtungsseitigen Endes des Schaftes entfallen.

Nach der DE9319009U weist ein Hammerbohrer drei Abfuhrnuten auf, welche gleichsteil in einem Bohrkopf mit Hartmetalleinsätzen auslaufen, die in bohrrichtungsseitig offenen Aussparungen eingebettet sind. Für eine hinreichende seitliche Abstützung der Hartmetalleinsätze sind die Abfuhrnuten im Bereich des Bohrkopfes nicht steil genug.

Der vorliegenden Erfindung liegt die Aufgabe zugrunde, ein Verfahren zur Herstellung eines Bohr - und/oder Meisselwerkzeugs mit hauptsächtich durch Umformung hergestellten Abfuhrnuten und in Aussparungen eingesetzten Hartmetalleinsätzen vorzuschlagen welches im Bereich des Bohrkopfes keiner sich unwirtschaftlich auswirkenden Sonderbehandlung bedarf.

Erfindungsgemäss wird die Aufgabe durch ein Verfahren mit den Merkmalen gemäß patentanspruch 1 gelöst.

Die erfindungsgemässe Lösung geht davon aus, dass wendelförmige Abfuhrnuten, mit ihrer zunehmenden Anzahl steiler, dh näherkommend achsparallel verlaufen. So zeigt es sich, dass bereits bei der Anordnung von drei Abfuhrnuten der Verlauf derart angenähert achsparallel verläuft, dass sich bei einem nicht oder nicht wesentlich neigungskorrigierten Auslauf im Bohrkopf eine ausreichende seitliche Abstützung für die Hartmetalleinsätze ergibt. Demnach sind durch Umformung hergestellte Werkzeuge mit wenigstens drei Abfuhrnuten keiner sich unwirtschaftlich auswirkenden Behandlung im Bereich des Bohrkopfes zu unterwerfen. Damit führt das Vorsehen von mindestens drei wendelförmigen Abfuhrnuten zu einem wirtschaftlich ausserordentlich interessanten Herstellverfahren.

Darüber hinaus darf nicht übersehen werden, dass ein Werkzeug mit einer grösseren Anzahl an Abfuhrnuten zu wesentlichen herstellungstechnischen Vorteilen führt. So ist bei Anordnung nur einer oder zwei Abfuhrnuten in axialer Richtung ein relativ grosser Materialfluss erforderlich, um ein ausreichendes Volumen für die Abfuhr des Bohrkleins zur Verfügung zu stellen. Bei der Anordnung von mindestens drei Abfuhrnuten verteilt sich dieses Volumen auf alle Abfuhrnuten, so dass ein wesentlich geringerer axialer Materialfluss bewerkstelligt werden muss. Dies führt im Falle der Anordnung von mindestens drei Abfuhrnuten bei Herstellung durch Umformung zu einer so geringen Materialumformung, dass innere Spannungen die zu Materialschädigungen führen, vermieden werden.

Für Werkzeuge mit kleinerem Durchmesser bieten sich aus der Sicht der Anordnung der Anzahl von Abfuhrnuten sowie im Hinblick auf die vorzunehmende Materialumformung vorteilhafterweise drei Abfuhrnuten an.

Für Werkzeuge von grösserem Durchmesser bieten sich wiederum aus der Sicht der vorzunehmenden Materialumformung vorzugsweise vier Abfuhrnuten an.

Je nach Verwendungszweck der erfindungsgemässen Werkzeuge sowie in Abhängigkeit von der Anzahl der Abfuhrnuten bietet es sich an, dass vorzugsweise der Steigungswinkel der Abfuhrnuten im Bereich des Auslaufes des Bohrkopfes dem Steigungswinkel der Abfuhrnuten im Schaft entspricht.

Gegebenenfalls kann der Steigungswinkel der Abfuhrnuten im Bereich des Auslaufes im Bohrkopf gegenüber dem Steigungswinkel der Abfuhrnuten im Schaft abweichen, wobei ein solches Abweichen vorzugsweise durch einen grösseren Steigungswinkel im Bereich des Bohrkopfes zustandekommt. Ein solches Abweichen des Steigungswinkels kann gegebenenfalls zu einer Verbesserung des Transportes von Bohrklein im Bereich des Bohrkopfes führen. Das Abweichen des Steigungswinkels erfordert eine Neigungskorrektur im Bereich des Bohrkopfes, wobei diese bei den erfindungsgemässen Werkzeugen derart geringfügig ausfällt, dass die Wirtschaftlichkeit bei der Herstellung nach wie vor gewährleistet bleibt. Die Korrektur erfolgt dabei spanlos.

Zur Herstellung des Werkzeuges kommen verschiedene an sich bekannte Umformverfahren in Betracht, wie beispielsweise Rundkneten, Schmieden oder Drallwalzen. Besonders bewährt aus der Sicht der Wirtschaftlichkeit sowie im Hinblick auf die Taktzeiten bei der Herstellung hat sich Profilkaltwalzen, insbesondere Profilrollkaltwalzen.

Wie eingangs erwähnt ist der Bohrkopf mit einer in Bohrrichtung offenen Aussparung versehen, in welcher ein oder mehrere Hartmetalleinsätze angeordnet sind. Diese Aussparungen können verschiedenartig ausgebildet sein, durchsetzen aber vorzugsweise die bohrrichtungsseitige Stirnfläche des Bohrkopfes über ihren gesamten Durchmesser. So können die Aussparungen schlitzartig entlang eines Durchmessers, sternartig oder kreuzartig verlaufen. Nebst der Anordnung mehrerer Hartmetalleinsätzen in diesen Aussparungen bietet sich vorteilhafterweise die Verwendung eines einstückig ausgebildeten Hartmetalleinsatzes an. Je nach Anordnung der Aussparung kann ein solch einstückig ausgebildeter Hartmetalleinsatz als Platte, Stern, Kreuz oder dergleichen ausgebildet sein.

Im Hinblick auf die konstruktive Auslegung von Bohrkopf und Hartmetalleinsatz bietet es sich zweckmässigerweise an, wenn der Hartmetalleinsatz eine der Anzahl der Abfuhrnuten entsprechende Anzahl Schneiden aufweist. So kann beispielsweise bei Anordnung von drei Abfuhrnuten der einstückig ausgebildete Hartmetalleinsatz sternförmig mit drei Schneiden und einer Zentrierspitze ausgebildet sein.

Die Erfindung wird nachstehend anhand eines Ausführungsbeispieles näher erläutert. Es zeigen:
- Fig. 1: das erfindungsgemässe Werkzeug in Seitenansicht;
- Fig. 2: das Werkzeug der Fig. 1 in einer Draufsicht auf den Bohrkopf.

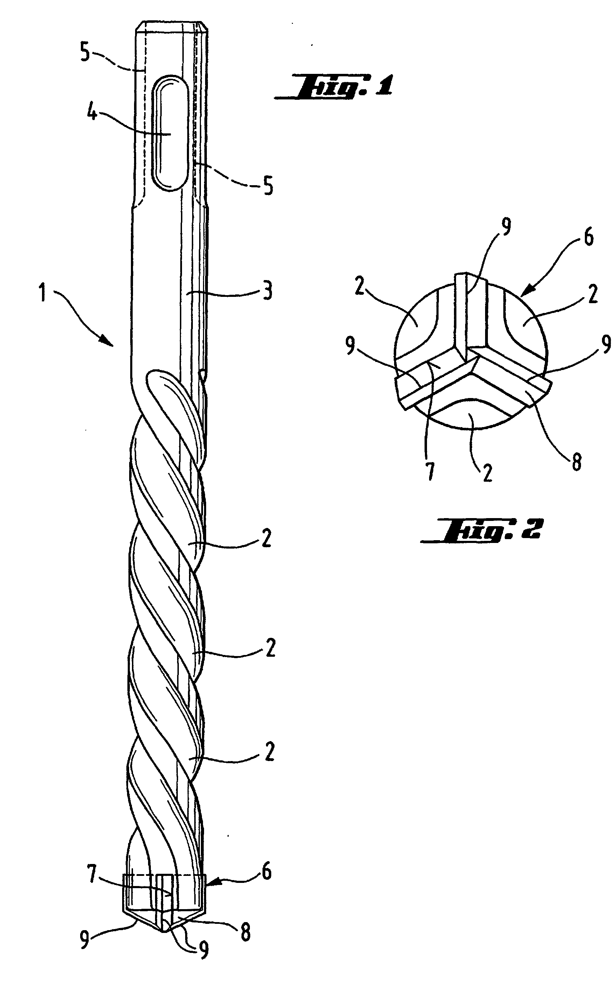

Das den Fig. 1 und 2 entnehmbare Werkzeug ist als Bohrwerkzeug ausgebildet und weist einen Schaft 1 mit drei wendelförmigen Abfuhrnuten 2 auf. An den Schaft 1 schliesst sich entgegen der Bohrrichtung ein Einsteckende 3 an, welches in bekannter Weise mit Verriegelungsnuten 4 und Drehmitnahmenuten 5 versehen ist. In Bohrrichtung schliesst sich an den Schaft 1 ein Bohrkopf 6 an, welcher eine in Bohrrichtung offene Aussparung 7 aufweist. In dieser Aussparung 7 ist ein einstückig ausgebildeter, Schneiden 9 aufweisender Hartmetalleinsatz 8 angeordnet.

Wie insbesondere Fig. 2 zeigt, ist der vorgenannte Hartmetalleinsatz 8 mit drei Schneiden 9 versehen. Demnach ist die Aussparung 7 entsprechend sternförmig ausgebildet.

Das in den Fig. 1 und 2 dargestellte Bohrwerkzeug ist hauptsächlich durch Umformung beispielsweise Profilrollkaltwalzen hergestellt worden. Insbesondere die Fig. 1 zeigt deutlich, wie die Abfuhrnuten 2 aufgrund ihrer grossen Anzahl relativ steil verlaufen. So ist auch der Auslauf der Abfuhrnuten 2 im Bereich des Bohrkopfes 6 relativ steil, dh schon sehr stark einem achsparallelen Verlauf angenähert. Dank dieses Verlaufes der Abfuhrnuten 2 entsteht im Bereich des Bohrkopf 6 einerseits ein ausreichender Durchtritt für das Bohrklein und es verbleibt andererseits ausreichend viel Material, welches der seitlichen Abstützung des Hartmetalleinsatzes 8 dient, wie dies insbesondere auch der Fig. 2 zu entnehmen ist Die Fig. 1 und 2 zeigen demnach ein Bohrwerkzeug, dessen Abfuhrnuten 2 im Bereich des Bohrkopfes keiner sich unwirtschaftlich auswirkenden Behandlung hinsichtlich Verlaufskorrektur zu unterwerfen sind, so dass eine Herstellung beispielsweise in einem Kaltwalzdurchlauf möglich ist.

## Patentansprüche

1. Verfahren zur Herstellung eines Bohr- und/oder Meisselwerkzeugs, wobei in einem ersten Schritt mehrere, in einem Schaft (1) wendelförmige, in einen Bohrkopf (6) auslaufende, Abfuhrnuten (2) hergestellt werden, in einen zweiten Schritt die Herstellung einer in Bohrrichtung offenen Aussparung (7) für einen Hartmetalleinsatz (8) erfolgt, der später mit dem Bohrkopf (6) verbunden wird, **dadurch gekennzeichnet, dass** im ersten Schritt die Abfuhrnuten durch spanloses Umformen hergestellt werden und dabei eine Neigungskorrektur zu mindestens drei im Bereich des Bohrkopfes (6) steileren Abfuhrnuten (2) erfolgt.

2. Verfahren nach Anspruch 1, **dadurch gekennzeichnet, dass** im ersten Schritt eine Neigungskorrektur zu einem nahezu achsparallelen Auslauf der Abfuhmuten (2) erfolgt.

3. Verfahren nach Anspruch 1 oder 2, **dadurch gekennzeichnet, dass** im zweiten Schritt die Herstellung der Aussparung (7) spanabhebend erfolgt.

## Claims

1. Method of manufacturing a drilling and/or chiselling tool, in which in a first step several spiral flutes (2) are produced in a shank (1), said flutes terminating in a drill head (6), and in a second step a recess (7), which is open in direction of drilling, is produced for a hard-metal insert (8), said hard-metal insert (8) being subsequently attached to the drill head (6), **characterized in that** in the first step the flutes are produced by non-cutting shaping and at the same time a correction of the pitch or gradient is made to produce at least three flutes (2) which are steeper in the region of the drill head (6).

2. Method according to Claim 1, **characterized in that** in the first step a correction of the pitch is made to produce a runout of the flutes (2) which is virtually parallel to the axis.

3. Method according to Claim 1 or 2, **characterized in that** in the second step the recess (7) is produced by a metal-cutting procedure.

## Revendications

1. Procédé pour la fabrication d'un outil de forage et/ou de burinage, dans lequel, dans une première étape, on réalise dans une tige (1) plusieurs gorges d'évacuation hélicoïdales (2) se terminant au niveau d'une tête de forage (6), dans une deuxième étape on réalise la fabrication d'un évidement (7) ouvert dans la direction de forage pour un élément rapporté en métal dur (8) qui sera relié ultérieurement à la tête de forage (6), **caractérisé en ce que**, dans la première étape, on réalise les gorges d'évacuation par formage sans enlèvement de copeaux et on effectue une correction d'inclinaison pour obtenir au moins trois gorges d'évacuation (2) plus pentues dans la zone de la tête de forage (6).

2. Procédé selon la revendication 1, **caractérisé en ce que** dans la première étape on effectue une correction d'inclinaison pour obtenir une terminaison des gorges d'évacuation (2) presque parallèle à l'axe.

3. Procédé selon la revendication 1 ou 2, **caractérisé en ce que** dans la deuxième étape la réalisation de l'évidement (7) s'effectue par enlèvement de copeaux.
